# EUROPEAN PATENT SPECIFICATION

(11) **EP 4 456 305 B1**
(45) Date of publication and mention of the grant of the patent: **23.09.2026**
(21) Application number: 22910750.3
(22) Date of filing: 25.11.2022
(51) Int. Cl.: H01M 50/429, H01M 4/525, H01M 50/403, H01M 50/449, H01M 50/489, H01M 50/491, H01M 50/417, H01M 10/0525

(54) **SECONDARY BATTERY SEPARATOR, PRODUCTION METHOD FOR SAME, AND SECONDARY BATTERY**
SEKUNDÄRBATTERIESEPARATOR, HERSTELLUNGSVERFAHREN DAFÜR UND SEKUNDÄRBATTERIE
SÉPARATEUR DE BATTERIE SECONDAIRE, SON PROCÉDÉ DE PRODUCTION ET BATTERIE SECONDAIRE

(30) Priority: 24.12.2021 JP 2021211384
(43) Date of publication of application: 30.10.2024
(73) Proprietor: Panasonic Intellectual Property Management Co., Ltd., Kadoma-shi, Osaka 571-0057 (JP)
(72) Inventor: HASEGAWA, Chisaki, Kadoma-shi, Osaka 571-0057 (JP); OKI, Yukihiro, Kadoma-shi, Osaka 571-0057 (JP); SHIRAKAMI, Atsuro, Kadoma-shi, Osaka 571-0057 (JP); ASANO, Kazuko, Kadoma-shi, Osaka 571-0057 (JP)
(74) Representative: Novagraaf International SA
(86) International application number: PCT/JP2022/043545
(87) International publication number: WO 2023/120032

(56) References cited:
- CN-A- 108 417 762
- CN-A- 108 807 819
- JP-A- 2011 150 866
- JP-A- 2021 501 456
- KR-A- 20110 041 448

## Description

### [Technical Field]

The present disclosure mainly relates to a separator for a secondary battery.

### [Background Art]

For a secondary battery including a lithium ion-conductive non-aqueous electrolyte, the amount of metal ions dissolved from the positive electrode tends to increase with an increase in the end-of-charge voltage. Any dissolved metal ions that have reached the negative electrode through migration will be deposited as a metal in the negative electrode, and thus may cause a reduction in the safety and the load characteristics of the battery.

Meanwhile, Patent Literature 1 proposes a binder that connects electrode materials of an electrochemical device. The binder contains: a pH adjustment functional agent that neutralizes a base in an aqueous system; and a metal-crosslinking thickening agent forming a hydrophobic gel by being crosslinked, in the aqueous system, with metal ions derived from an electrode active material. An object of Patent Literature 1 is to provide a binder that makes it possible to produce an electrode slurry with use of water as a solvent and without causing alkalinization of the electrode slurry, even in a case where an electrode active material that is highly prone to hydrolysis is used.

Patent Literature 2 proposes a nanocomposite material including nano-objects made of at least one first electron conductive material, and nano-objects or submicron objects made of at least one second material different from the first material. The nanocomposite material includes nanostructures each constituted by a three-dimensional network composed of the nano-obj ects made of the at least one first electron conductive material bound to a polysaccharide and maintained by the polysaccharide. The nano-objects or submicron objects made of the at least one second material different from the first material are self-assembled around the aforementioned network, and bound to the nano-objects made of the at least one first electron conductive material by the polysaccharide. The nanostructures are uniformly dispersed in the material.

Patent Literature 3 proposes a negative electrode active material for a non-aqueous secondary battery, wherein a first and a second organic component adsorb and cover negative electrode graphite particles of a non-aqueous secondary battery using a massive graphite particle group. The massive graphite particle group has an apparent density as measured by a tap method, of 0.70 g/cm³ or more, 0.5 mass% of ash, and a total sum of Fe, Cu, and Zn as measured by acid extraction/ICP analysis, of 100 ppm or less, and includes, as a first component, 0.1 to 2 mass% of at least one selected from a polysaccharide, polyuronide, gelatin, casein, and a water soluble polyether, and, as a second component, 0.001 to 0.5 mass% of at least one selected from a monosaccharide, a disaccharide, an oligosaccharide, amino acid, gallic acid, tannin, saccharin, and salts thereof, and butynediol.

Patent Literature 4 proposes an electrode formed using a mixture including: a metal oxide or a metallic hydroxide serving as an active material; a copolymer of one or more saccharides including glucose, glucuronic acid, rhamnose, mannose, galactose, or a salt thereof, and containing, in at least a part thereof, a 2-substituted compound, a 3-substituted compound, or a 5-substituted compound; and a copolymer of maleic acid, an anhydride thereof, or a salt thereof and at least one unsaturated monomer. Patent Literature 5 relates to a lithium-ion battery separator, its preparation method, and a lithium-ion battery, and discloses a separator comprising a cyclodextrin polymer layer on the surface of a PP/PE/PP porous membrane substrate. Patent Literature 6 relates to a separator for a lithium-sulfur battery, its preparation method, and the lithium-sulfur battery itself.

### [Citation List]

### [Patent Literatures]

Patent Literature 1: WO 2020/095466
Patent Literature 2: Japanese Laid-Open Patent Publication (Translation of PCT Application) No. 2016-504707
Patent Literature 3: Japanese Laid-Open Patent Publication No. 2011-134572
Patent Literature 4 : Japanese Laid-Open Patent Publication No. 2003-308840
Patent Literature 5 : CN 108 417 762 A
Patent Literature 6 : CN 108 807 819 A

### [Summary of Invention]

### [Technical Problem]

By applying an organic polymer having an anionic functional group capable of trapping metal ions to a separator, the metal deposition in a negative electrode is expected to be suppressed. However, it is difficult to uniformly apply an organic polymer having an anionic functional group of high polarity to the surface of a separator of low polarity. Even if applied successfully, the organic polymer is likely to coagulate, and the pores of the separator are blocked by the organic polymer, so that the load characteristics of the battery tends to be reduced

### [Solution to Problem]

An aspect of the present disclosure relates to a separator for a secondary battery as defined in the appended claims. The separator for a secondary battery includes: a porous substrate having a first surface and a second surface located opposite to the first surface; and a polysaccharide attached to the porous substrate, wherein the polysaccharide has a sulfo group. According to the claimed invention, the number of moles of the sulfo group per unit mass of the polysaccharide is 1.0 × 10⁻⁶ mol/g or more, and the amount per apparent unit area of the polysaccharide attached to the porous substrate is 1.0 × 10⁻⁵ g/m² or more and 1.0 × 10² g/m² or less.

Another aspect of the present disclosure relates to a secondary battery as defined in the appended claims. It includes: a positive electrode; a negative electrode; a lithium ion-conductive non-aqueous electrolyte; and a separator interposed between the positive electrode and the negative electrode, wherein the separator is the above-described separator for a secondary battery.

Yet another aspect of the present disclosure relates to a manufacturing method of a separator for a secondary battery as defined in the appended claims. The method includes: a step of preparing a porous substrate having a first surface and a second surface located opposite to the first surface; a step of preparing a solution of a polysaccharide having a sulfo group; a step of applying the solution to the porous substrate; and a step of drying the porous substrate having the solution applied thereto.

### [Advantageous Effects of Invention]

A polysaccharide having a sulfo group and attached to a porous substrate is highly effective in trapping metal ions, is less likely to block pores of the porous substrate, and increases the wettability of a separator to a non-aqueous electrolyte, thus suppressing the metal deposition in a negative electrode and enhancing the load characteristics of a secondary battery.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

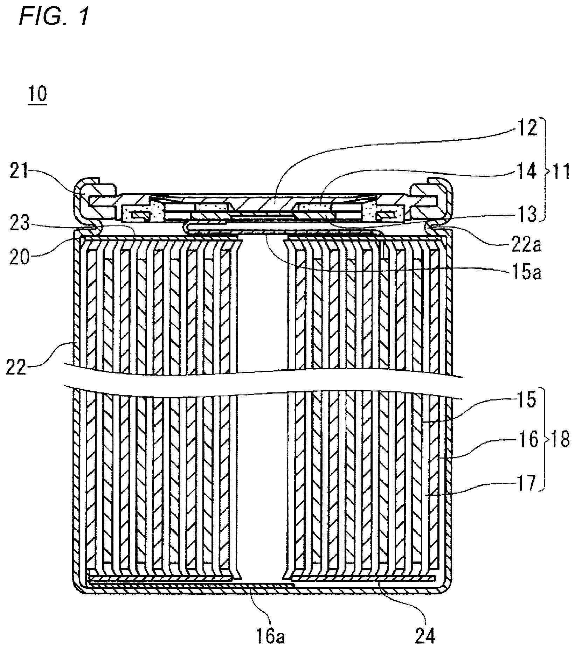

[FIG. 1] A vertical cross-sectional view schematically showing an internal structure of a secondary battery according to an embodiment of the present disclosure.

### [Description of Embodiment]

In the following, an embodiment of a separator for a secondary battery and a secondary battery using the separator according to the present disclosure will be described by way of examples. However, the present disclosure is not limited to the examples described below. Although examples of specific numerical values and materials may be given in the following description, other numerical values and materials may be used as long as the effects of the present disclosure can be achieved. In the present specification, the expression "from a numerical value A to a numerical value B" includes the numerical value A and the numerical value B, and can be read as "a numerical value A or more and a numerical value B or less". In the following description, when examples of the lower and upper limits of a numerical value related to a specific physical property, condition, or the like are given, any one of the given examples of the lower limit and any one of the given examples of the upper limit can be freely combined as long as the lower limit is not equal to or greater than the upper limit.

The present disclosure encompasses combinations of matters recited in two or more claims freely selected from a plurality of claims recited in the appended claims. That is, matters recited in two or more claims freely selected from a plurality of claims recited in the appended claims can be combined as long as there are no technical discrepancies.

### A. Separator for secondary battery

A separator for a secondary battery according to the present disclosure includes a porous substrate, and a polysaccharide attached to the porous substrate. The polysaccharide includes at least one or a plurality of sulfo groups (-SO₃X or -SO₃⁻) in its molecule. The polysaccharide has a large number of hydrophilic groups and a relatively large molecular weight, and therefore hardly dissolves in an non-aqueous electrolyte contained in the battery, and can be fixed to the porous substrate over a long period of time without being detached from the porous substrate.

The sulfo group may be any one of the acid type (-SO₃X where X is H), the salt type (-SO₃X where X is a cation), and the anion type (-SO₃⁻). The cation included as X in the sulfo group may be a metal ion, an organic cation, or an ammonium ion (NH₄⁺).

The metal ion may be a cation of an alkali metal, an alkaline-earth metal, and the like, and may be, for example, a cation of barium, calcium, magnesium, potassium, sodium, and lithium and the like.

The plurality of sulfo groups included in the molecule of the polysaccharide may be of the same type or different types. For example, the polysaccharide having sulfo groups of the salt type may have two or more sulfo groups having different cations. A combination of a plurality of polysaccharides having different molecular structures may be attached to the porous substrate, or only one kind polysaccharide may be attached to the porous substrate

Hereinafter, a polysaccharide having sulfo groups will also be referred to as a "polysaccharide (S)".

The porous substrate has a first surface and a second surface located opposite to the first surface. In other words, the porous substrate may be in the form of a membrane, a sheet, or a film. The porous substrate may be a stretched film, a non-woven fabric, a woven fabric, or the like.

A separator for a secondary battery including a porous substrate and a polysaccharide (S) attached to the porous substrate has the effect of suppressing the metal deposition in a negative electrode, and may enhance the load characteristics of a secondary battery. The possible reasons for this are as follows.

First, the polysaccharide (S) can be a barrier that suppresses the movement of metal ions between the electrodes. The sulfo groups of the polysaccharide (S) efficiently trap impurities and the metal ions dissolved from the positive electrode. The sulfo groups are highly effective in trapping the metal ions.

Second, the polysaccharide (S) has a property of being likely to be attached to the porous substrate, but is less likely to block the pores of the porous substrate. The polysaccharide (S) exhibits high solubility in a specific hydrophilic solvent, and therefore can thinly and uniformly attached along the inner walls of the pores of the porous substrate easily. Accordingly, it is possible to easily prevent a phenomenon in which the polysaccharide (S) closes the openings of the pores, or prevent the polysaccharide (S) from being filled in the pores. It seems that the properties of the sulfo groups having high ionicity contribute to the high solubility of the polysaccharide (S).

Third, the polysaccharide (S) tends to increase the wettability of the porous substrate (i.e., the separator) to a non-aqueous electrolyte. The polysaccharide (S) hardly dissolves in the non-aqueous electrolyte, but has higher affinity for the non-aqueous electrolyte than a porous substrate commonly used as a separator of a secondary battery. A separator formed by a porous substrate having the polysaccharide (S) attached thereto has higher wettability to the non-aqueous electrolyte than a separator that does not include the polysaccharide (S). As a result, the load characteristics of the secondary battery using the separator formed by the porous substrate having the polysaccharide (S) attached thereto are improved as compared with those of the secondary battery using the separator that does not include the polysaccharide (S).

The effect of the polysaccharide (S) in suppressing the movement of metal ions is noticeable, for example, in the case where impurity metals such as copper, iron, and the like are present in the secondary battery. When impurity metals are exposed to a positive electrode potential, metal ions are dissolved from the impurity metals into the non-aqueous electrolyte. In a secondary battery having a high upper-limit voltage, the metal ions may also be dissolved from the active material particles contained in the positive electrode. For example, a secondary battery having an upper-limit voltage exceeding 4.3 V has a high positive electrode potential, and the positive electrode active material particles of the secondary battery include metal components (in most cases, transition metals), so that the metal ions may be dissolved. The metal ions dissolved into the non-aqueous electrolyte move from the positive electrode side to the negative electrode side, and are deposited as impurity metals. In contrast, when the polysaccharide (S) is included in the separator, the movement of the dissolved metal ions between the electrodes is significantly suppressed. Hereinafter, metal ions that may be deposited as impurity metals in the negative electrode will also be referred to as impurity metal ions.

The polysaccharide (S) contained in the separator is fixed to the porous substrate, whereas the impurity metal ions dissolved into the non-aqueous electrolyte on the positive electrode side pass through the separator when moving to the negative electrode side. Accordingly, the probability that the impurity metal ions are trapped by the polysaccharide (S) is increased. The trapped metal ions are fixed to the porous substrate as in the case of the polysaccharide (S), and their degree of freedom of movement is limited. Thus, the movement of the impurity metal ions from the positive electrode side to the negative electrode side is significantly suppressed.

A separator for a secondary battery (i.e., a separator (hereinafter also referred to as a "separator (S)") including a porous substrate and a polysaccharide (S) attached thereto) according to the present disclosure may have an air permeability as measured by a method prescribed in JIS P 8117 of, for example, 100 sec/100 mL or more and 500 sec/100 mL or less, or 400 sec/100 mL or less. Since the polysaccharide (S) is less likely to block the pores of the porous substrate, such a low air permeability can be easily ensured. Note that in general, the smaller the numerical value of the air permeability, the larger the pore volume of the separator tends to be.

A polysaccharide is a generic term for polymers having structures in which a plurality of monosaccharide molecules are liked via glycosidic linkages. The polysaccharide is not particularly limited, but preferably has the property of being dissolved in, for example, a solvent mixture of water and ethanol with a volume ratio 50:50, from the viewpoint of ensuring the ease of manufacture of the separator.

Examples of the basic structure of the polysaccharide that can be used include aldoses, ketoses, pyranoses, and furanoses. Examples of the monosaccharide molecules (monomers) constituting the polysaccharide include trioses, tetroses, pentoses, hexoses, and heptoses. Among these, aldopentoses, ketopentoses, aldohexoses, ketohexoses, and the like are desirable, and a galactose classified as an aldohexose may be used, for example. For example, the polysaccharide (S) may have a backbone of a galactose polymer. The polysaccharide (S) may be obtained by sulfuric acid esterification of a polymer of these monosaccharides.

A polysaccharide (e.g., carrageenan) inherently having a sulfo group may be used, or the polysaccharide (S) may be obtained by sulfuric acid esterification of pectin, alginic acid, pullulan, mannan, xanthan gum, guar gum, starch, glycogen, chitin, dextran, agarose, carrageenan, heparin, hyaluronic acid, glucomannan, gum arabic, gelatin, tremella gum, or the like. Among these, carrageenan can be preferably used. Carrageenan can be classified into kappa, iota, lambda, and other carrageenan types, and any one of these types may be used.

The content of the carrageenan included in the polysaccharide (S) attached to the porous substrate (i.e., included in the separator) may be, for example, 70 mass% or more, or the carrageenan may constitute 100% of the polysaccharide (S).

For simplicity, whether the separator includes the polysaccharide (S) can be confirmed by analyzing an infrared absorption spectrum of the separator as obtained by FT-IR measurement. Various polysaccharides (S) exhibit respective unique spectra. In the spectra, peaks attributed to, for example, monosaccharide molecular species (e.g., for carrageenan, a C-O bond or the like included in a galactose backbone), a S=O bond, a C-O-S bond, and the like are observed.

Whether the separator includes a sulfo group bound to a polysaccharide can be quantitatively confirmed by elementary analysis (e.g., inductively-coupled plasma emission spectrometry (IPC), scanning electron microscope-energy dispersive X-ray analysis (SEM-EDX), or the like).

The number of moles of the sulfo group per unit mass of the polysaccharide (S) is 1.0 × 10⁻⁶ mol/g or more, and may be 1.0 × 10⁻⁴ mol/g or more, or 1.0 × 10⁻³ mol/g or more and 1.0 × 10⁻² mol/g or less. A polysaccharide having a high sulfo group content has the ability to trap more metal ions, has excellent solubility in a solvent mixture of water and ethanol, and is likely to be thinly and uniformly attached along the inner walls of the pores of the porous substrate.

The amount per apparent unit area of the polysaccharide (S) attached to the porous substrate (hereinafter also referred to as an "area density of the polysaccharide (S)) is 1.0 × 10⁻⁵ g/m² or more and 1.0 × 10² g/m² or less, and may be 1.0 × 10⁻⁴ g/m² or more and 1.0 × 10¹ g/m² or less, or 1.0 × 10⁻³ g/m² or more and 1.0 g/m² or less. The apparent unit area means one unit (1 m²) of an area surrounded by a contour of a projection image of the porous substrate as viewed from the direction normal to the first surface and the second surface of the porous substrate.

To determine the area density of the polysaccharide (S), first, a sample having a predetermined size is cut out from the separator. The sample is heated for one hour or more at 60°C, and thereafter a dry mass W1 is determined. Next, the sample in a dry state is immersed in a solvent mixture (20°C to 30°C) of water and ethanol with a volume ratio of 50:50 for one hour. Thereafter, the sample is thoroughly washed with the solvent mixture of water and ethanol with a volume ratio of 50:50, and then dried for one hour or more at 60°C. Thereafter, a dry mass W2 is obtained. The polysaccharide (S) is, in effect, completely removed by immersion in the solvent mixture and washing with the solvent mixture. Thereafter, the area density of the polysaccharide (S) is determined from the dry masses W1 and W2 and the size (apparent area) of the sample.

The area density of the polysaccharide (S) may be determined from a sample of a separator removed from a secondary battery in a fully discharge state (SOC=0%). In that case, the separator may be thoroughly washed with dimethyl carbonate (DMC), and thereafter vacuum-dried to be used as a sample.

In the separator (S), the distribution of the polysaccharide (S) may be varied in the thickness direction of the porous substrate. For example, a larger amount of the polysaccharide (S) may be distributed in the vicinity of a surface opposed to the positive electrode from which metal ions will be dissolved. This reduces the distance by which the metal ions dissolved from the positive electrode can migrate, thus further reducing the probability that the metal ions reach the negative electrode.

Specifically, when the porous substrate is divided into a first region and a second region that have the same thickness, the first region being located on the first surface side (positive electrode side) and the second region being located on the second surface side (negative electrode side), a content C1 of the polysaccharide included in the first region may be larger than a content C2 of the polysaccharide included in the second region. In this case, the mass ratio: C1/C2 of the content C1 to the content C2 is greater than 1, and may be 1.1 or more, 1.2 or more, or 1.5 or more. In other words, when T represents the thickness of the separator (S) or the porous substrate (S), a presence probability P1 of the polysaccharide (S) present in the first region extending from the first surface to a position corresponding to 0.5 T (the center in the thickness direction), and a presence probability P2 of the polysaccharide (S) present in the second region extending from a position corresponding to 0.5 T (the center in the thickness direction) to the second surface satisfy 1 < P1/P2, and P1/P2 may be 1.2 or more, or 1.5 or more.

The presence probabilities P1 and P2 of the polysaccharide (S) may be measured in a cross section obtained by cutting the separator in the thickness direction. At that time, a thermosetting resin may be filled in the separator and then be cured. For example, a cross-section sample of the separator is obtained using a cross section polisher (CP) method, a focused ion beam (FIB) method, or the like. The P1/P2 ratio between the presence probabilities P1 and P2 of the polysaccharide (S) can be determined by analyzing the cross-section sample of the separator using SEM and EDX. For example, the amounts of sulfur element included in the first region and the amount of sulfur element included in the second region may be quantitatively determined from a map of sulfur element obtained from the data generated by the EDX analysis of the cross-section sample, and the ratio between the obtained values may be used as the P1/P2 ratio. P1 and P2 are measured along the planar direction of the separator in an observation field of view of 20 µm or more. P1 and P2 may be average values of P1 and P2, each obtained in a plurality of (e.g.,. three or more) observation fields of view.

### <Manufacturing method of separator>

Next, an example of the manufacturing method of the separator for a secondary battery (separator (S)) according to an embodiment of the present disclosure will be described.

The manufacturing method includes: a step (I) of preparing a porous substrate having a first surface and a second surface located opposite to the first surface; a step (II) of preparing a solution of a polysaccharide having a plurality of sulfo groups (hereinafter also referred to as a "polysaccharide solution"); an application step (III) of applying the polysaccharide solution to the porous substrate; and a drying step (IV) (i.e., a step of obtaining a separator) of drying the porous substrate having the polysaccharide solution applied thereto.

### (I) Step of preparing porous substrate

For example, a porous sheet, such as a stretched film (or a microporous thin film), a non-woven fabric, and a woven fabric, commonly used as a separator of a secondary battery (in particular, a lithium ion battery) may be used as the porous substrate. The porous sheet has moderate mechanical strength and is also insulating.

For example, a polyolefin such as polypropylene and polyethylene may be used as the material of the porous sheet. The porous substrate may include a heat-resistant insulating layer on a surface layer portion of at least one of the first surface and the second surface. The heat-resistant insulating layer may include an inorganic oxide filler as a main component (e.g., 80 mass% or more), or may include a heat-resistant resin as a main component (e.g., 40 mass% or more). A polyamide resin such as aromatic polyamide (aramid), a polyimide resin, a polyamide imide resin, or the like may be used as the heat-resistant resin.

The thickness of the porous substrate is not particularly limited, but is, for example, 1 to 50 µm, and may be 5 to 30 µm.

### (II) Step of preparing polysaccharide solution

The polysaccharide solution is prepared by mixing the polysaccharide (S) with a solvent, to dissolve the polysaccharide (S) in the solvent. The polysaccharide solution may further include an additive other than the solvent, such as an alcohol, a phosphorus compound, a boron compound, or a sulfur compound. The polysaccharide solution includes, for example, a solvent mixture of water and ethanol, and a polysaccharide (S) dissolved in such a solvent mixture; however, the polysaccharide solution is not limited thereto.

The solvent is preferably water, alcohol (e.g., ethanol), or a solvent mixture of water and alcohol, but is not particularly limited as long as the solvent is capable of dissolving the polysaccharide (S). Ethers such as tetrahydrofuran, amides such as dimethylformamide, ketones such as cyclohexanone, N-methyl-2-pyrrolidone (NMP), a solvent mixture thereof, or the like may be used as at least a part of the solvent. Among these, a solvent mixture of water and ethanol is preferred, and the volume ratio between water and ethanol is, for example, water/ethanol = 20/80 to 80/20, and may be water/ethanol = 40/60 to 60/40, or water/ethanol = 45/55 to 55/45.

### (III) Application step

The method for applying the polysaccharide solution to the porous substrate is not particularly limited. For example, application methods using various coaters, dipping, spraying, and the like can be adopted. Examples of the coaters that can be used include a bar coater, a gravure coater, a blade coater, a roll coater, a comma coater, a die coater, and a lip coater.

In the application step, the polysaccharide solution may be applied only to the first surface of the porous substrate. For example, the polysaccharide solution may be applied only to the first surface side of the porous substrate using any one of various coaters, or the polysaccharide solution may be sprayed only to the first surface side of the porous substrate. With such a method, the content C1 of the polysaccharide (S) included in the first region located on the first surface side of the porous substrate can be larger than the content C2 of the polysaccharide (S) included in the second region located on the second surface side of the porous substrate. The ratio: C1/C2 of the content C1 to the content C2 may be controlled at 1.1 or more by controlling the application amount of the polysaccharide solution to be applied and/or controlling drying conditions described below.

### (IV) Drying step

In the drying step, the porous substrate having the polysaccharide solution applied thereto is dried, to complete the separator. In the case of controlling the C1/C2 ratio in the above-described manner, the polysaccharide (S) may be migrated in the first surface side together with the solvent by appropriately controlling conditions during drying. As a result, the polysaccharide (S) is localized on the first surface side.

After the drying step, the separator may be rolled. Through rolling, a separator with high flatness can be obtained. The porous substrate having the polysaccharide solution applied thereto may be rolled while heating the porous substrate using a hot roll at a temperature lower than the melting point of the material of the porous substrate, thus performing drying and rolling simultaneously.

### B. Secondary battery

Secondary batteries according to an embodiment of the present disclosure include non-aqueous electrolyte secondary batteries such as a lithium ion secondary battery using, as a negative electrode active material, a material that reversibly adsorbs and desorbs lithium ions, a lithium secondary battery in which lithium metal is deposited in the negative electrode during charging, and lithium metal is dissolved during discharging, and a solid-state battery including a gel electrolyte or a solid electrolyte. These secondary batteries each include a positive electrode, a negative electrode, a lithium ion-conductive non-aqueous electrolyte, and the above-described separator for a secondary battery (separator (S)) that is interposed between the positive electrode and the negative electrode. In the case of controlling the C1/C2 ratio in the above-described manner, the separator is disposed such that the first surface is opposed to the positive electrode. The non-aqueous electrolyte may be liquid (i.e., an electrolytic solution) as a whole, or an electrolytic solution retained in a matrix material may be used as a solid electrolyte or a gel electrolyte.

The end-of-charge voltage of the secondary battery according to the present disclosure may be set to 4.3 V or more, even 4.4 V or more, or even 4.5 V or more. In a secondary battery having such an end-of-charge voltage (i.e., an upper-limit voltage), the amount of dissolution of the metal ions from the positive electrode generally tends to increase. On the other hand, the secondary battery according to the present disclosure includes the separator (S) including the polysaccharide having a sulfo group, so that there is a low probability that the dissolved metal ions reach the negative electrode, and the metal deposition in the negative electrode is significantly suppressed.

Hereinafter, the configuration of the secondary battery will be specifically described, taking a lithium ion secondary battery as an example.

### [Positive electrode]

The positive electrode includes, for example, a positive electrode current collector and a positive electrode active material layer. The positive electrode active material layer is carried on one surface or both surfaces of the positive electrode current collector.

The positive electrode active material layer may be, for example, a positive electrode mixture layer made of a positive electrode mixture. The positive electrode mixture includes a positive electrode active material as an essential component, and may include optional components. The optional components may include a binder, a conductive material, a thickener, and so forth.

The positive electrode active material layer can be formed, for example, by applying, to a surface of the positive electrode current collector, a positive electrode slurry obtained by dispersing the positive electrode mixture in a dispersing medium, and drying the slurry. A coating film obtained after drying may be rolled, as necessary.

A sheet-shaped conductive material (a metal foil, a mesh, a net, a punched sheet, etc.) can be used as the positive electrode current collector. Among these, a metal foil is preferred. Examples of the material of the positive electrode current collector include stainless steel, aluminum, an aluminum alloy, and titanium. The thickness of the positive electrode current collector is not particularly limited, but is, for example, 1 to 50 µm, and may be 5 to 30 µm.

The thickness of the positive electrode active material layer is not particularly limited, but may be, for example, 30 µm or more and 400 µm or less, or 50 µm or more and 250 µm or less. One positive electrode active material layer may be formed by a plurality of layers having configurations different from each other. For example, two or more layers including active material particles having average particle diameters different from each other may be stacked, or two or more layers of positive electrode active materials having types or compositions different from each other may be stacked.

The average particle diameter of the particles of the positive electrode active material is, for example, 3 µm or more and 30 µm or less, and may be 5 µm or more and 25 µm or less. Here, the average particle diameter is a median diameter (D₅₀) at a cumulative volume of 50% in a volume-based particle size distribution, as determined using a laser diffraction particle size distribution analyzer. The active material particles may be separated and recovered from the positive electrode. As the measurement apparatus, an "LA-750" manufactured by HORIBA, Ltd. (HORIBA) can be used, for example.

The positive electrode active material may include a lithium-containing transition metal oxide. From the viewpoint of increasing the capacity, it is preferable that the lithium-containing transition metal oxide includes a lithium nickel oxide (composite oxide N) including lithium and Ni and having a layered rock-salt crystal structure. The proportion of the composite oxide N in the positive electrode active material is, for example, 70 mass% or more, 90 mass% or more, or 95 mass% or more. The proportion of Ni in metallic elements included in the composite oxide N, other than Li, may be 50 atom% or more.

The composite oxide N is represented, for example, by the formula (1): LiₐNiₓ₁M1ₓ₂M2₍₁₋ₓ₁₋ₓ₂)O_{2+β}. Here, the element M1 is at least one selected from the group consisting of V, Co, and Mn. The element M2 is at least one selected from the group consisting of Mg, Al, Ca, Ti, Cu, Zn, and Nb. Note, however, that the formula (1) satisfies 0.9 ≤ α ≤ 1.1, -0.05 ≤ β ≤ 0.05, 0.5 ≤ x1 < 1, 0 ≤ x2 ≤ 0.5, and 0 < 1 - x1 - x2 ≤ 0.5. The value of α increases or decreases through charging and discharging.

The composite oxide N includes Ni, and may also include, as the element M1 and the element M2, at least one selected from the group consisting of Co, Mn, and Al. Co, Mn, and Al contribute to the stabilization of the crystal structure of the composite oxide N.

From the viewpoint of reducing the cost and increasing the capacity, the proportion of Co in metallic elements included in the composite oxide N, other than Li, is preferably 0 atom% or more and 20 atom% or less, and more preferably 0 atom% or more and 15 atom% or less.

The proportion of Mn in the metallic elements other than Li may be 30 atom% or less, or 20 atom% or less. The proportion of Mn in the metallic elements other than Li may be 1 atom% or more, 3 atom% or more, or 5 atom% or more.

The proportion of Al in the metallic elements other than Li may be 10 atom% or less, or 5 atom% or less. The proportion of Al in the metallic elements other than Li may be 1 atom% or more, 3 atom% or more, or 5 atom% or more.

The composite oxide N may be represented, for example, by the formula (2): Li_{α}Ni_{(1-y1-y2-y3-z)}Co_{y1}Mn_{y2}Al_{y3}M_{z}O_{2+β}. Mn and/or Al contribute to the stabilization of the crystal structure of the composite oxide N having a reduced Co content. The element M is an element other than Li, Ni, Co, Mn, Al, and oxygen, and may be at least one selected from the group consisting of Ti, Zr, Nb, Mo, W, Fe, Zn, B, Si, Mg, Ca, Sr, Sc, and Y Note, however, that the formula (2) satisfies 0.9 ≤ α ≤ 1.1, -0.05 ≤ β ≤ 0.05, 0 ≤y1 ≤ 0.1, 0 ≤ y2 ≤ 0.6, 0 ≤ y3 ≤ 0.1, and 0 ≤ z ≤ 0.10. The value of 1-y1-y2-y3-z (=v), which represents the atomic ratio of Ni, is, for example, 0.4 or more, and may be 0.6 or more, 0.8 or more, or 0.85 or more, or may be 0.90 or more or 0.95 or more. The value of v, which represents the atomic ratio of Ni, may be 0.98 or less, or 0.95 or less.

When the composite oxide N includes Co, the proportion of Co in the metallic elements other than Li, may be 1.5 atom% or less. Successfully increasing the Ni content of the composite oxide N by reducing the Co content thereof is advantageous in terms of cost and can secure a high capacity. On the other hand, in general, metal ions tend to be dissolved from such a Co-free composite oxide N or a composite oxide N with a low Co content. In this respect, the secondary battery according to the present disclosure includes the separator (S) including a polysaccharide having a sulfo group. Accordingly, the probability that dissolved metal ions reach the negative electrode is low, so that the metal deposition in the negative electrode is significantly suppressed.

Examples of the conductive material that may be included as optional components in the positive electrode active material layer include carbon nanotubes (CNTs), carbon fibers other than CNTs, and conductive particles (e.g., carbon black, graphite).

### [Negative electrode]

The negative electrode includes at least a negative electrode current collector, and includes, for example, a negative electrode current collector and a negative electrode active material layer. The negative electrode active material layer is carried on one surface or both surfaces of the negative electrode current collector.

The negative electrode active material layer may be a negative electrode mixture layer made of a negative electrode mixture. The negative electrode mixture layer is in the form of a membrane or a film. The negative electrode mixture includes particles of a negative electrode active material as an essential component, and may include a binder, a conductive agent, a thickener, and so forth as optional components. A lithium metal foil or a lithium alloy foil may be attached to the negative electrode current collector as the negative electrode active material layer.

The negative electrode mixture layer can be formed, for example, by applying, to a surface of the negative electrode current collector, a negative electrode slurry obtained by dispersing the negative electrode mixture including particles of the negative electrode active material, a binder, and so forth in a dispersing medium, and drying the slurry. A coating film obtained after drying may be rolled, as necessary.

A sheet-shaped conductive material (a metal foil, a mesh, a net, a punched sheet, etc.) is used the negative electrode current collector. Among these, a metal foil is preferred. Examples of the material of the negative electrode current collector include stainless steel, nickel, a nickel alloy, copper, and a copper alloy. The thickness of the negative electrode current collector is not particularly limited, but is, for example, 1 to 50 µm, and may be 5 to 30 µm.

The negative electrode active material includes a material that electrochemically absorbs and desorb lithium ions, a lithium metal, a lithium alloy, and the like. A carbon material, an alloy-based material, and the like can be used as the material that electrochemically absorbs and desorbs lithium ions. Examples of the carbon material include graphite, graphitizable carbon (soft carbon), and non-graphitizable carbon (hard carbon). Preferred among these is graphite, which exhibits excellent stability during charging and discharging and also has a small irreversible capacity. Examples of the alloy-based material include materials including at least one metal capable of forming an alloy with lithium, and specific examples thereof include silicon, tin, a silicon alloy, a tin alloy, and a silicon compound. Silicon oxide, tin oxide, and the like may also be used.

As the alloy-based material including silicon, it is possible to use, for example, a composite material including a lithium ion conductive phase, and silicon particles dispersed in the lithium ion conductive phase. As the lithium ion conductive phase, it is possible to use, for example, a silicon oxide phase, a silicate phase, a carbon phase, and the like. The main component (e.g., 95 to 100 mass%) of the silicon oxide phase may be silicon dioxide. In particular, a composite material composed of a silicate phase and silicon particles dispersed in the silicate phase is preferred because of the high capacity and the small irreversible capacity. As the silicate phase, a lithium silicate phase (silicate phase including lithium) having a small irreversible capacity and high initial charge-discharge efficiency is preferred.

The lithium silicate phase may be any oxide phase including lithium (Li), silicon (Si), and oxygen (O), and may include other elements. The atomic ratio: O/Si of O to Si in the lithium silicate phase is, for example, greater than 2 and less than 4. Preferably, the O/Si is greater than 2 and less than 3. The atomic ratio: Li/Si of Li to Si in the lithium silicate phase is, for example, greater than 0 and less than 4. The lithium silicate phase can have a composition represented by a formula: Li₂₂SiO_{2+z} where 0 < z < 2. The value of z preferably satisfies a relationship 0 < z < 1, and more preferably z = 1/2. Examples of the elements other than Li, Si and O that can be included in the lithium silicate phase include iron (Fe), chromium (Cr), nickel (Ni), manganese (Mn), copper (Cu), molybdenum (Mo), zinc (Zn), and aluminum (Al).

The carbon phase can be composed of, for example, shapeless carbon with low crystallinity (i.e., amorphous carbon). The shapeless carbon may be, for example, hard carbon, soft carbon, or others.

For example, a resin material is used as the binder. Examples of the binder include polyacrylic acid and polyacrylic acid salts, as well as derivatives thereof, fluorocarbons, polyolefin resins, polyamide resins, polyimide resins, acrylic resins, vinyl resins, and rubber particles. The binders may be used alone, or in combination of two or more thereof.

Examples of the conductive material include carbon nanotubes (CNTs), and carbon fibers other than CNTs, and conductive particles (e.g., carbon black, graphite).

Examples of the thickener include cellulose derivatives (cellulose ether, etc.), including, for example, carboxymethyl cellulose (CMC) and modified products thereof (also including salts such as a Na salt), and methylcellulose; saponified products of polymers having vinyl acetate units such as polyvinyl alcohol; and polyethers (polyalkylene oxides such as polyethylene oxide, etc.).

### [Non-aqueous electrolyte]

The non-aqueous electrolyte may be a liquid electrolyte (electrolytic solution), a gel electrolyte, or a solid electrolyte. The liquid electrolyte (electrolytic solution) is, for example, an electrolytic solution including a non-aqueous solvent, and a lithium salt dissolved in the non-aqueous solvent. The concentration of the lithium salt in the electrolytic solution is, for example, 0.5 mol/L or more and 2 mol/L or less. The electrolytic solution may contain a known additive.

The gel electrolyte includes a lithium salt and a matrix polymer, or includes a lithium salt, a non-aqueous solvent, and a matrix polymer. For example, a polymer material that absorbs and gelatinizes a non-aqueous solvent is used as the matrix polymer. Examples of the polymer material include fluorocarbon resins, acrylic resins, polyether resins, and polyethylene oxides.

The solid electrolyte may be an inorganic solid electrolyte. For example, materials known for an all-solid-state lithium-ion secondary battery and the like can be used as the inorganic solid electrolyte (e.g., an oxide-based solid electrolyte, a sulfide-based solid electrolyte, a halidebased solid electrolyte, etc.).

For example, a cyclic carbonic acid ester, a chain carbonic acid ester, a cyclic carboxylic acid ester, and the like can be used as the non-aqueous solvent. Examples of the cyclic carbonic acid ester include propylene carbonate (PC) and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). The non-aqueous solvents may be used alone, or in combination of two or more thereof.

Examples of the lithium salt include lithium salts of chlorine-containing acid (LiClO₄, LiAlCl₄, LiB₁₀Cl₁₀, etc.), lithium salts of fluorine-containing acid (LiPF₆, LiBF₄, LiSbF₆, LiAsF₆, LiCF₃SO₃, LiCF₃CO₂, etc.), lithium salts of fluorine-containing acid imide (LiN(SO₂F)₂, LiN(CF₃SO₂)₂, LiN(CF₃SO₂)(C₄F₉SO₂), LiN(C₂F₅SO₂)₂, etc.), and lithium halides (LiCl, LiBr, LiI, etc.). The lithium salts may be used alone, or in combination of two or more thereof.

Examples of the structure of the secondary battery include a structure in which an electrode group formed by winding a positive electrode and a negative electrode with a separator interposed therebetween is accommodated in an exterior member together with an electrolytic solution. However, the present disclosure is not limited thereto, and an electrode group having another configuration may be adopted. For example, the electrode group may be a stacked electrode group formed by stacking a positive electrode and a negative electrode with a separator interposed therebetween. The configuration of the secondary battery is also not limited, and the secondary battery may have, for example, a cylindrical configuration, a prismatic configuration, a coin configuration, a button configuration, a laminated configuration, and the like.

Hereinafter, the structure of the secondary battery will be described with reference to FIG. 1. FIG. 1 is a vertical cross-sectional view of a cylindrical non-aqueous secondary battery 10 as an example of the present embodiment. However, the present disclosure is not limited to the following configuration.

The secondary battery 10 includes an electrode group 18, an electrolytic solution (not shown), and a bottomed cylindrical battery can 22 accommodating the electrode group 18 and the electrolytic solution. A sealing body 11 is crimped to an opening portion of the battery can 22 with a gasket 21 interposed therebetween. Thus, the interior of the battery is sealed. The sealing body 11 includes a valve body 12, a metal plate 13, and an annular insulating member 14 interposed between the valve body 12 and the metal plate 13. The valve body 12 and the metal plate 13 are connected to each other at their respective central portions. A positive electrode lead 15a led out from a positive electrode plate 15 is connected to the metal plate 13. Accordingly, the valve body 12 functions as an external terminal of the positive electrode. A negative electrode lead 16a led out from a negative electrode plate 16 is connected to the inner surface of the bottom of the battery can 22. An annular groove part 22a is formed in the vicinity of an opening edge of the battery can 22. A first insulating plate 23 is disposed between one end face of the electrode group 18 and the annular groove part 22a A second insulating plate 24 is disposed between the other end face of the electrode group 18 and the bottom of the battery can 22. The electrode group 18 is formed by winding the positive electrode plate 15 and the negative electrode plate 16 with a separator 17 interposed therebetween.

Hereinafter, the present disclosure will be specifically described by way of examples and comparative examples. However, the present disclosure is not limited to the following examples.

### [Examples]

Hereinafter, the present invention will be specifically described by way of examples and comparative examples. However, the present invention is not limited to the following examples.

### <<Example 1>>

According to the following procedure, a lithium ion secondary battery was produced and evaluated.

### (1) Production of positive electrode

To 100 parts by mass of particles of a positive electrode active material, 1 part by mass of acetylene black, 1 part by mass of polyvinylidene fluoride, and a proper amount of NMP were added, to obtain a positive electrode slurry. Next, the positive electrode slurry was applied to one surface of an aluminum foil, and the resulting coating film was dried and then rolled to form a positive electrode active material layer (thickness: 95 µm, density: 3.6 g/cm³) on the surface of the aluminum foil, to obtain a positive electrode. LiNi_{0.7}Mn_{0.3}O₂ was used as the positive electrode active material.

The positive electrode was cut out into a predetermined shape, and the positive electrode active material layer was partially stripped off, to obtain an evaluation positive electrode. The positive electrode is shaped to include a 60 mm × 40 mm power generation region with the positive electrode active material layer, and a 10 mm × 10 mm connection region without the positive electrode active material layer. A positive electrode tab lead was connected to the connection region.

### (2) Production of negative electrode

A lithium metal foil was attached to one surface of an electrolytic copper foil (current collector), to produce a negative electrode. The negative electrode was cut out into the same shape as the positive electrode. The lithium metal foil on the connection region was stripped off, and thereafter a negative electrode tab lead is connected to the connection region.

### (3) Separator

### (I) Step of preparing porous substrate

As a porous substrate, a polyethylene microporous thin film (air permeability: 108 sec/100 mL) having a thickness of 12 µm was prepared. The microporous thin film is a biaxially stretched film commonly used as a separator of a lithium ion secondary battery as it is.

### (II) Step of preparing polysaccharide solution

A polysaccharide solution including 0.5 parts by mass of carrageenan (κ-carrageenan), 49.5 parts by mass of water, and 50 parts by mass of ethanol was prepared. The κ-carrageenan was completely dissolved in the polysaccharide solution.

### (III) Application step

The polysaccharide solution was spray-coated only to one surface (i.e., a first surface) of the microporous thin film. Thus, a content C1 of the polysaccharide (S) included in a first region located on the first surface side of the microporous thin film was made lager than a content C2 of the polysaccharide (S) included in a second region located on a second surface side.

### (IV) Drying step

In a drying step, with the first surface side facing upward and the second surface side disposed on a placement member, the porous substrate onto which the polysaccharide solution had been applied was dried at 60°C for 3 hours, thus completing a separator with the polysaccharide (S) attached thereto.

The obtained separator had an air permeability of 128 sec/100 mL. As a result of measuring the IR spectrum of the separator using FT-IR, various peaks attributed to the κ-carrageenan, including a C-O-S bond and a S=O bond, were observed. In addition, as a result of performing elementary analysis using IPC, sulfur element was detected, confirming the presence of a sulfo group.

To measure the rates of permeation of the electrolytic solution through the microporous thin film before the polysaccharide (S) had been attached thereto and through the separator having the polysaccharide (S) attached thereto, 0.03 mL of propylene carbonate (PC) was added dropwise to each of the microporous thin film and the separator, and the time required for permeation of the PC therethrough was measured. As a result, the permeation time of the PC through the separator having the polysaccharide (S) attached thereto was 50, with the permeation time of the PC through the microporous thin film before the polysaccharide (S) had been attached thereto taken as 100, confirming that the wettability or permeability of the separator to the electrolytic solution was increased approximately twofold by the attachment of the polysaccharide (S).

### (4) Preparation of electrolytic solution

In a solvent mixture of fluoroethylene carbonate (FEC) and dimethyl carbonate (DMC) with a volume ratio of 20:80, LiPF₆ was dissolved at a concentration of 1 mol/L, to prepare an electrolytic solution.

### (5) Production of evaluation battery

Using the positive electrode, the negative electrode, and the above-described evaluation separator, a battery having a design capacity of 114 mAh was produced. The positive electrode and the negative electrode were placed on top one another with the evaluation separator interposed between the positive electrode active material layer and the lithium metal foil, to obtain an electrode plate group. At this time, the first surface was opposed to the positive electrode active material layer. The electrode plate group, together with 1.2 cm³ of the electrolytic solution, was accommodated in a case made of a laminate film and having the shape of an envelope open at both ends. The tab leads were led out from one of the openings, and that opening was sealed. Thereafter, the case was allowed to stand for 3 minutes under reduced pressure of 0.02 MPa, and subsequently the pressure was returned to atmospheric pressure. This operation was performed twice, to impregnate the positive electrode active material layer and the separator with the electrolytic solution. Finally, the other opening was sealed, to obtain an evaluation battery A1 of Example 1. The production of the evaluation battery was performed in a dry-air atmosphere with a dew point of -60°C or less.

### (6) Evaluation of battery

### <Dissolution of metal ions>

The evaluation battery was pressure-fixed at 3.2 MPa while being sandwiched by a pair of 10 × 5 cm clamps made of stainless steel (thickness: 6 mm), and then subjected to charging and discharging in a constant-temperature bath at 25°C under the following conditions.

First, constant-current charging was performed at 0.3C (1C is a current value at which the design capacity can be discharged in one hour) under a high temperature condition of 55°C until the battery voltage reached 4.5 V, and thereafter constant-voltage charging at 4.5 V was performed for 3 days. Next, discharging was performed at a constant current of 0.3C at room temperature until the battery voltage reached 2.5 V, thereafter charging was performed at a constant current of 0.3C until the battery voltage reached 4.5 V, and constant-voltage charging was further performed until the current value was less than 0.05C. Thereafter, discharging was performed at a constant current of 0.3C until the battery voltage reached 2.5 V. Between charging and discharging, the battery was allowed to stand for 20 minutes under an open circuit.

Thereafter, the battery was disassembled, and the amount of metal deposition on the negative electrode surface was analyzed by inductively-coupled plasma emission spectrometry (ICP-AES).

### <Load characteristics>

Next, another evaluation battery A1 was prepared, and the evaluation battery A1 was fixed using the clamps in the same manner as described above, and then subjected to charging and discharging in a constant-temperature bath at 25°C under the following conditions. The ratio of the discharge capacity at 1C to the discharge capacity at 0.1C was determined as load characteristics (%). The higher the value, the better the load characteristics.

First, charging was performed at a constant current of 0.3C until the battery voltage reached 4.5 V, and thereafter charging was performed at a constant voltage of 4.5 V until the current value was less than 0.05C. Next, discharging was performed at a constant current of 0.1C until the battery voltage reached 2.5 V. Subsequently, charging was performed at a constant current of 0.3C until the battery voltage reached 4.5 V, and thereafter charging was performed at a constant voltage of 4.5 V until the current value was less than 0.05C. Next, discharging was performed at a constant current of 1C until the battery voltage reached 2.5 V. Between charging and discharging, the battery was allowed to stand for 20 minutes under an open circuit.

The amount of metal deposition and the load characteristics are shown in Table 1. Note that both the amount of metal deposition and the load characteristics are relative values (%), with the corresponding values of B1 taken as 100%.

### <<Comparative Example 1>>

A battery B1 was produced and evaluated in the same manner as in Example 1 except that a 12-µm-thick polyethylene microporous thin film (air permeability: 108 sec/100 mL) was directly used as the separator without attaching the polysaccharide (S) to the porous substrate.

### <<Comparative Example 2>>

Although an attempt was made to attach lithium polyacrylate to the porous substrate in place of the polysaccharide (S) using the same process as in Example 1, the lithium polyacrylate was not uniformly dissolved in the solvent and hence was difficult to be uniformly applied to the microporous thin film.

**[Table 1]**

| Battery | Amount of metal deposition (relative value) | Load characteristics (relative value) |
|---|---|---|
| A1 | 44 | 108 |
| B1 | 100 | 100 |

From a comparison between the batteries A1 and B1, it can be understood that using the separator having the polysaccharide (S) attached thereto can significantly reduce the amount of deposition of metal ions. This is presumably because most of the metal ions dissolved from the positive electrode were trapped by the sulfo group of the polysaccharide (S).

From a comparison between the batteries A1 and B1, it can also be understood that using the separator having the polysaccharide (S) attached thereto can significantly enhance the load characteristics. This is presumably because the polysaccharide (S) was thinly and uniformly attached to the inner walls of the pores of the separator without blocking the pores of the separator, thus significantly increasing the wettability of the separator to the electrolytic solution.

### [Industrial Applicability]

The separator for a secondary battery according to the present disclosure and the secondary battery including the same are useful as main power sources for mobile communication devices, mobile electronic devices, electric automobiles, and the like.

Although the present invention has been described in terms of the presently preferred embodiments, it is to be understood that such disclosure is not to be interpreted as limiting. Variants will no doubt become apparent to those skilled in the art to which the present invention pertains, after having read the above disclosure.

### [Reference Signs List]

10: secondary battery, 11: sealing body, 12: valve body, 13: metal plate, 14: insulating member, 15: positive electrode plate, 15a: positive electrode lead, 16: negative electrode plate, 16a: negative electrode lead, 17: separator, 18: electrode group, 21: gasket, 22: battery can, 22a: groove part, 23: first insulating plate, 24: second insulating plate

## Claims

1. A separator for a secondary battery, comprising:
a porous substrate having a first surface and a second surface located opposite to the first surface; and
a polysaccharide attached to the porous substrate,
**characterized in that**
the polysaccharide has a sulfo group,
the number of moles of the sulfo group per unit mass of the polysaccharide is 1.0 × 10⁻⁶ mol/g or more, and
the amount per apparent unit area of the polysaccharide attached to the porous substrate is 1.0 × 10⁻⁵ g/m² or more and 1.0 × 10² g/m² or less.

2. The separator for a secondary battery according to claim 1, wherein the polysaccharide is attached to at least the first surface.

3. The separator for a secondary battery according to claim 1 or 2, wherein the separator has an air permeability as measured by a method prescribed in JIS P 8117, of 100 sec/100 mL or more and 500 sec/100 mL or less.

4. The separator for a secondary battery according to any one of claims 1 to 3, wherein the polysaccharide has a backbone of a galactose polymer.

5. The separator for a secondary battery according to any one of claims 1 to 4, wherein the polysaccharide includes carrageenan.

6. The separator for a secondary battery according to any one of claims 1 to 5, wherein,
when the porous substrate is divided into a first region and a second region that have the same thickness, the first region being located on the first surface side and the second region being located on the second surface side,
a content C1 of the polysaccharide included in the first region is larger than a content C2 of the polysaccharide included in the second region.

7. The separator for a secondary battery according to claim 6, wherein a mass ratio: C1/C2 of the content C1 to the content C2 is 1.1 or more.

8. A secondary battery comprising:
a positive electrode; a negative electrode; a lithium ion-conductive non-aqueous electrolyte; and a separator interposed between the positive electrode and the negative electrode, wherein
the separator is the separator for a secondary battery according to any one of claims 1 to 7, and
the first surface is opposed to the positive electrode.

9. The secondary battery according to claim 8, wherein the secondary battery has an end-of-charge voltage of 4.3 V or more.

10. The secondary battery according to claim 8 or 9, wherein
the positive electrode includes a lithium-containing transition metal oxide as active material particles,
the lithium-containing transition metal oxide includes a lithium nickel oxide including lithium and Ni and having a layered rock-salt crystal structure, and
a proportion of Ni in metallic elements included in the lithium nickel oxide, other than Li, is 50 atom% or more.

11. The positive electrode for a secondary battery according to claim 10, wherein,
when the lithium nickel oxide includes Co, a proportion of Co in the metallic elements other than Li is 2.0 atom% or less.

12. A manufacturing method of a separator for a secondary battery, comprising:
a step of preparing a porous substrate having a first surface and a second surface located opposite to the first surface;
a step of preparing a solution of a polysaccharide having a sulfo group;
an application step of applying the solution to the porous substrate; and
a drying step of drying the porous substrate having the solution applied thereto.

13. The manufacturing method of a separator for a secondary battery according to claim 12, wherein the solution includes a solvent mixture of water and ethanol, and the polysaccharide dissolved in the solvent mixture.

14. The manufacturing method of a separator for a secondary battery according to claim 12 or 13, wherein, in the application step, the solution is applied to the first surface of the porous substrate.

## Patentansprüche

1. Separator für eine Sekundärbatterie, umfassend:
ein poröses Substrat mit einer ersten Oberfläche und einer zweiten Oberfläche, die der ersten Oberfläche gegenüberliegt; und
ein Polysaccharid, das an dem porösen Substrat angebracht ist,
**dadurch gekennzeichnet, dass**
das Polysaccharid eine Sulfogruppe aufweist,
die Molzahl der Sulfogruppe pro Masseneinheit des Polysaccharids 1,0 × 10⁻⁶ mol/g oder mehr beträgt, und
die Menge pro scheinbarer Flächeneinheit des an dem porösen Substrat angebrachten Polysaccharids 1,0 × 10⁻⁵ g/m² oder mehr und 1,0 × 10² g/m² oder weniger beträgt.

2. Separator für eine Sekundärbatterie nach Anspruch 1, wobei das Polysaccharid an zumindest der ersten Oberfläche angebracht ist.

3. Separator für eine Sekundärbatterie nach Anspruch 1 oder 2, wobei der Separator eine Luftdurchlässigkeit, gemessen nach einem in JIS P 8117 vorgeschriebenen Verfahren, von 100 sec/100 mL oder mehr und 500 sec/100 mL oder weniger aufweist.

4. Separator für eine Sekundärbatterie nach einem der Ansprüche 1 bis 3, wobei das Polysaccharid ein Grundgerüst eines Galactosepolymers aufweist.

5. Separator für eine Sekundärbatterie nach einem der Ansprüche 1 bis 4, wobei das Polysaccharid Carrageenan umfasst.

6. Separator für eine Sekundärbatterie nach einem der Ansprüche 1 bis 5, wobei,
wenn das poröse Substrat in einen ersten Bereich und einen zweiten Bereich unterteilt wird, die die gleiche Dicke aufweisen, wobei der erste Bereich auf der Seite der ersten Oberfläche angeordnet ist und der zweite Bereich auf der Seite der zweiten Oberfläche angeordnet ist,
ein Gehalt C1 des in dem ersten Bereich enthaltenen Polysaccharids größer ist als ein Gehalt C2 des in dem zweiten Bereich enthaltenen Polysaccharids.

7. Separator für eine Sekundärbatterie nach Anspruch 6, wobei ein Massenverhältnis C1/C2 des Gehalts C1 zum Gehalt C2 1,1 oder mehr beträgt.

8. Sekundärbatterie, umfassend:
eine positive Elektrode; eine negative Elektrode; einen lithiumionenleitfähigen nichtwässrigen Elektrolyten; und einen zwischen der positiven Elektrode und der negativen Elektrode angeordneten Separator, wobei
der Separator der Separator für eine Sekundärbatterie nach einem der Ansprüche 1 bis 7 ist, und
die erste Oberfläche der positiven Elektrode gegenüberliegt.

9. Sekundärbatterie nach Anspruch 8, wobei die Sekundärbatterie eine Ladeschlussspannung von 4,3 V oder mehr aufweist.

10. Sekundärbatterie nach Anspruch 8 oder 9, wobei
die positive Elektrode ein lithiumhaltiges Übergangsmetalloxid als Aktivmaterialpartikel umfasst,
das lithiumhaltige Übergangsmetalloxid ein Lithium-Nickel-Oxid umfasst, das Lithium und Ni enthält und eine geschichtete Steinsalz-Kristallstruktur aufweist, und
ein Anteil von Ni an den in dem Lithium-Nickel-Oxid enthaltenen metallischen Elementen außer Li 50 Atom-% oder mehr beträgt.

11. Positive Elektrode für eine Sekundärbatterie nach Anspruch 10, wobei,
wenn das Lithium-Nickel-Oxid Co enthält, ein Anteil von Co an den metallischen Elementen außer Li 2,0 Atom-% oder weniger beträgt.

12. Herstellungsverfahren für einen Separator für eine Sekundärbatterie, umfassend:
einen Schritt des Bereitstellens eines porösen Substrats mit einer ersten Oberfläche und einer zweiten Oberfläche, die der ersten Oberfläche gegenüberliegt;
einen Schritt des Bereitstellens einer Lösung eines Polysaccharids mit einer Sulfogruppe;
einen Aufbringungsschritt des Aufbringens der Lösung auf das poröse Substrat; und
einen Trocknungsschritt des Trocknens des porösen Substrats, auf das die Lösung aufgebracht ist.

13. Herstellungsverfahren für einen Separator für eine Sekundärbatterie nach Anspruch 12, wobei die Lösung ein Lösungsmittelgemisch aus Wasser und Ethanol und das in dem Lösungsmittelgemisch gelöste Polysaccharid umfasst.

14. Herstellungsverfahren für einen Separator für eine Sekundärbatterie nach Anspruch 12 oder 13, wobei in dem Aufbringungsschritt die Lösung auf die erste Oberfläche des porösen Substrats aufgebracht wird.

## Revendications

1. Séparateur pour batterie secondaire, comprenant :
un substrat poreux ayant une première surface et une deuxième surface située à l'opposé de la première surface ; et
un polysaccharide fixé au substrat poreux,
**caractérisé en ce que**
le polysaccharide a un groupe sulfo,
le nombre de moles du groupe sulfo par unité de masse du polysaccharide est de 1,0 × 10⁻⁶ mol/g ou plus, et
la quantité par unité de surface apparente du polysaccharide fixé au substrat poreux est de 1,0 × 10⁻⁵ g/m² ou plus et de 1,0 × 10² g/m² ou moins.

2. Séparateur pour batterie secondaire selon la revendication 1, dans lequel le polysaccharide est fixé à au moins la première surface.

3. Séparateur pour batterie secondaire selon la revendication 1 ou 2, dans lequel le séparateur a une perméabilité à l'air, telle que mesurée par une méthode prescrite dans JIS P 8117, de 100 sec/100 mL ou plus et de 500 sec/100 mL ou moins.

4. Séparateur pour batterie secondaire selon l'une quelconque des revendications 1 à 3, dans lequel le polysaccharide a un squelette d'un polymère de galactose.

5. Séparateur pour batterie secondaire selon l'une quelconque des revendications 1 à 4, dans lequel le polysaccharide comprend du carraghénane.

6. Séparateur pour batterie secondaire selon l'une quelconque des revendications 1 à 5, dans lequel,
lorsque le substrat poreux est divisé en une première région et une deuxième région qui ont la même épaisseur, la première région étant située du côté de la première surface et la deuxième région étant située du côté de la deuxième surface,
une teneur C1 du polysaccharide contenu dans la première région est supérieure à une teneur C2 du polysaccharide contenu dans la deuxième région.

7. Séparateur pour batterie secondaire selon la revendication 6, dans lequel un rapport massique C1/C2 de la teneur C1 à la teneur C2 est de 1,1 ou plus.

8. Batterie secondaire, comprenant :
une électrode positive ; une électrode négative ; un électrolyte non aqueux conducteur d'ions lithium ; et un séparateur interposé entre l'électrode positive et l'électrode négative, dans laquelle
le séparateur est le séparateur pour batterie secondaire selon l'une quelconque des revendications 1 à 7, et
la première surface est opposée à l'électrode positive.

9. Batterie secondaire selon la revendication 8, dans laquelle la batterie secondaire a une tension de fin de charge de 4,3 V ou plus.

10. Batterie secondaire selon la revendication 8 ou 9, dans laquelle
l'électrode positive comprend un oxyde de métal de transition contenant du lithium comme particules de matériau actif,
l'oxyde de métal de transition contenant du lithium comprend un oxyde de nickel-lithium comprenant du lithium et du Ni et ayant une structure cristalline de type sel gemme en couches, et
une proportion de Ni dans les éléments métalliques inclus dans l'oxyde de nickel-lithium, autres que Li, est de 50 % atomique ou plus.

11. Électrode positive pour batterie secondaire selon la revendication 10, dans laquelle,
lorsque l'oxyde de nickel-lithium comprend du Co, une proportion de Co dans les éléments métalliques autres que Li est de 2,0 % atomique ou moins.

12. Procédé de fabrication d'un séparateur pour batterie secondaire, comprenant :
une étape de préparation d'un substrat poreux ayant une première surface et une deuxième surface située à l'opposé de la première surface ;
une étape de préparation d'une solution d'un polysaccharide ayant un groupe sulfo ;
une étape d'application consistant à appliquer la solution au substrat poreux ; et
une étape de séchage consistant à sécher le substrat poreux sur lequel la solution a été appliquée.

13. Procédé de fabrication d'un séparateur pour batterie secondaire selon la revendication 12, dans lequel la solution comprend un mélange d'eau et d'éthanol comme solvants, et le polysaccharide dissous dans le mélange de solvants.

14. Procédé de fabrication d'un séparateur pour batterie secondaire selon la revendication 12 ou 13, dans lequel, dans l'étape d'application, la solution est appliquée à la première surface du substrat poreux.
